# EUROPEAN PATENT APPLICATION

(11) **EP 4 534 235 A1**
(43) Date of publication of application: **09.04.2025**
(21) Application number: 23854665.9
(22) Date of filing: 26.01.2023
(51) Int. Cl.: B23K 31/00, G06N 20/10

(54) **WELDING DATA COLLECTION METHOD**

(30) Priority: 18.08.2022 JP 2022130374
(71) Applicant: Mitsubishi Heavy Industries, Ltd., Tokyo 100-8332 (JP)
(72) Inventor: YASUDA, Masayuki, Tokyo 100-8332 (JP); NISHIKI, Hisashi, Tokyo 100-8332 (JP); NAGAO, Kenichi, Tokyo 100-8332 (JP); NAKASHIMA, Yoshiyuki, Tokyo 100-8332 (JP); MATSUBARA, Takanobu, Tokyo 100-8332 (JP); YAMASHINA, Yusuke, Tokyo 100-8332 (JP)
(74) Representative: Cabinet Beau de Loménie
(86) International application number: PCT/JP2023/002373
(87) International publication number: WO 2024/038625

(57) **Abstract**

A welding data collection method is a collection method of collecting welding data including a plurality of parameters having an influence on a welding state and including at least a parameter indicating an underlayer shape of a welding target. The welding data collection method includes a step of measuring a temperature on an upstream side of a welding position of the welding target in a welding direction, and a step of acquiring the welding data to which a value based on the temperature measured as the parameter indicating the underlayer shape is input.

## Description

### TECHNICAL FIELD

The present disclosure relates to a welding data collection method.

Priority is claimed on Japanese Patent Application No. 2022-130374, filed on August 18, 2022, the content of which is incorporated herein by reference.

### BACKGROUND ART

As a technology for improving welding quality, for example, Patent Document 1 discloses performing automatic welding processing, via machine-learning, a physical quantity related to arc welding, such as an appearance of a welding bead, a bead excess height, and a bead width, which are obtained by processing imaging data, and an arc welding condition, such as a welding speed and a protrusion length, and adjusting the arc welding condition based on a physical quantity obtained from imaging data.

### Citation List

### Patent Document

Patent Document 1: Japanese Patent No. 6126174

### SUMMARY OF INVENTION

### Technical Problem

In addition, a laser displacement meter may be used as means for precisely measuring the shape of a welding target (preform) and a welding bead. However, since the laser displacement meter is expensive, the cost of collecting welding data used for measuring the shape of a welding target, a welding bead, and the like increases.

The present disclosure has been made in view of such problems, and provides a welding data collection method capable of collecting welding data used for machine learning or evaluation in a welding state with a simple and inexpensive configuration. Solution to Problem

According to an aspect of the present disclosure, a welding data collection method is a collection method of collecting welding data including a plurality of parameters having an influence on a welding state and including at least a parameter indicating an underlayer shape of a welding target. The welding data collection method includes a step of measuring a temperature of the welding target as the parameter indicating the underlayer shape, and a step of acquiring the welding data to which a value based on the temperature measured as the parameter indicating the underlayer shape is input.

### Advantageous Effects of Invention

With the welding data collection method according to the present disclosure, it is possible to collect welding data used for machine learning or evaluation of a welding state with a simple and inexpensive configuration.

### BRIEF DESCRIPTION OF DRAWINGS

[FIG. 1] FIG. 1 is a schematic diagram representing an overall configuration of a welding data collection system according to an embodiment of the present disclosure.
[FIG. 2] FIG. 2 is a diagram representing an example of a temperature measurement value according to the embodiment of the present disclosure.
[FIG. 3] FIG. 3 is a flowchart representing an example of a welding data collection method according to the embodiment of the present disclosure.
[FIG. 4] FIG. 4 is a diagram representing an example of welding data according to the embodiment of the present disclosure.
[FIG. 5] FIG. 5 is a first diagram representing an example of a machine learning model constructed by using learning data according to the embodiment of the present disclosure.
[FIG. 6] FIG. 6 is a second diagram representing the example of the machine learning model constructed using the learning data according to the embodiment of the present disclosure.
[FIG. 7] FIG. 7 is a diagram representing a functional configuration of a welding assistance device according to the embodiment of the present disclosure.

### DESCRIPTION OF EMBODIMENTS

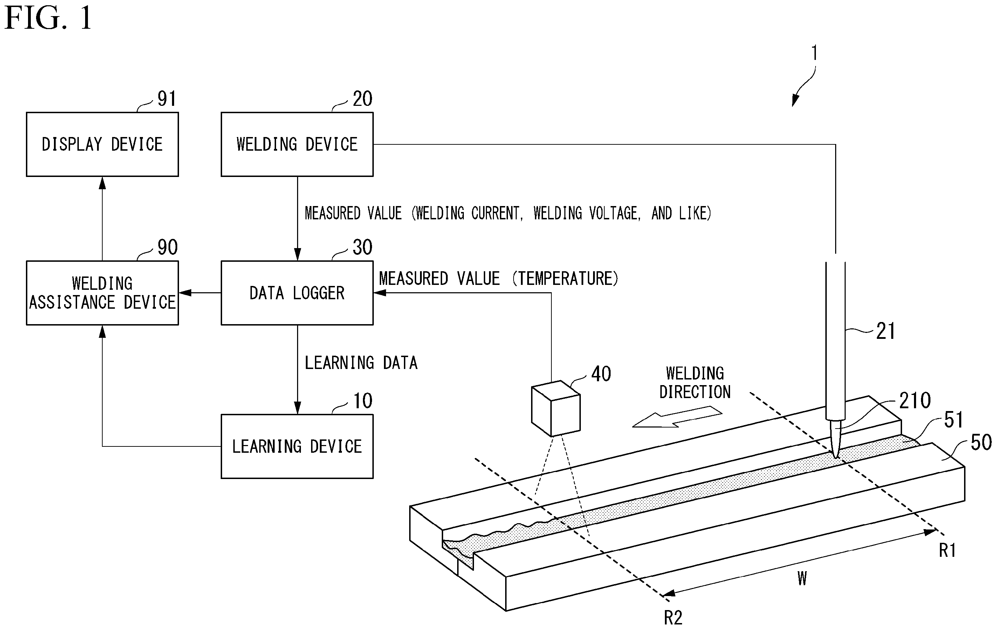

Hereinafter, a welding data collection method according to an embodiment of the present disclosure will be described with reference to FIGS. 1 to 7.

### (Overall Configuration of Welding Data Collection System)

FIG. 1 is a schematic diagram representing an overall configuration of a welding data collection system according to an embodiment of the present disclosure.

As represented in FIG. 1, a collection system 1 according to the present embodiment includes a learning device 10, a welding device 20, a data logger 30, and a welding assistance device 90.

The welding device 20 includes an operation panel on which devices such as switches and levers for adjusting various parameters having an influence on a welding state, and instruments are provided. A welder performs welding of a welding target 50 by using a welding rod 21 having an electrode 210 while adjusting each parameter on an operation panel of the welding device. These parameters are, for example, a welding current, a welding voltage, a protrusion length of the electrode 210, and the like. The welding state is an abnormality degree indicating the presence or absence of a welding defect, a sign of a welding defect, or the like.

The data logger 30 collects welding data including a plurality of parameters measured by sensors provided in each location of the welding device 20, the vicinity of a welding part, and the like, as learning data and evaluation data. The data logger 30 collects, for example, learning data including parameters such as a welding current and a welding voltage measured by an ammeter and a voltmeter provided in the welding device 20, and a temperature measured by a radiation thermometer 40. In addition, the data logger 30 collects welding data (evaluation data) as an evaluation target when the welding state is evaluated.

The radiation thermometer 40 is disposed at a measurement position R2 that is a position separated from a welding position R1 (position of the electrode 210) on an upstream side in a welding direction by a predetermined distance W. The radiation thermometer 40 measures the temperatures of the welding target 50 and a welding bead 51 at the measurement position R2.

The learning device 10 performs machine learning based on the learning data collected by the data logger 30 and constructs a learning model that evaluates the welding state. The learning device 10 constructs, for example, an evaluation model that evaluates the abnormality degree of the welding state, a defect estimation model that estimates the position and the type of a welding defect, and the like based on the welding data.

The welding assistance device 90 monitors the welding state based on the welding data (evaluation data) acquired by the data logger 30, and displays the current welding state on a display device 91 to assist welding work of the welder.

### (Regarding Trend of Underlayer Shape)

It is known that an occurrence of a welding defect is highly likely to be influenced by unevenness of an underlayer shape. Therefore, in a technology of the related art, the underlayer shape is measured by using a laser displacement meter, and the measurement data is included in learning data used for machine learning. However, as described above, the laser displacement meter is expensive, which is a factor that increases the cost of collecting the learning data.

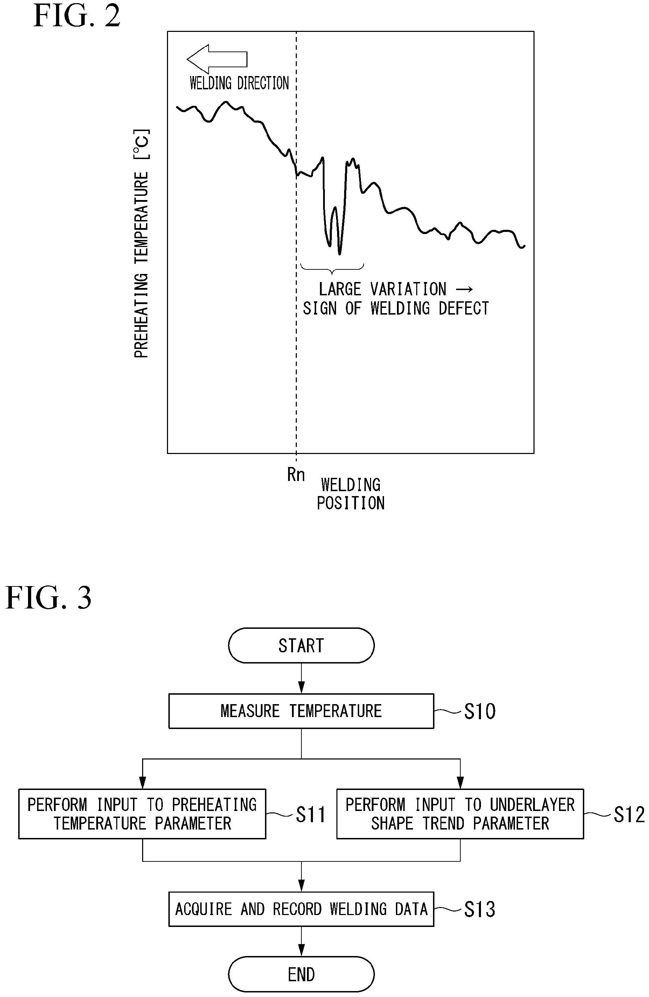

FIG. 2 is a diagram representing an example of a temperature measurement value according to the embodiment of the present disclosure.

FIG. 2 is a graph showing a transition of a preheating temperature in an occurrence path of a welding defect. The horizontal axis of FIG. 2 indicates a welding position R1 of the welding target 50, and the vertical axis indicates a preheating temperature of the measurement position R2. For example, in a case where a structure having a ring shape such as a pipe is welded while being rotated, the welding position may be indicated by a rotation angle of the structure. In addition, a position Rn indicates an occurrence position of a welding defect. The welding defect is detected by non-destructive inspection or the like after welding.

As represented in FIG. 2, the preheating temperature is disturbed before the occurrence position Rn of the welding defect. When the surface at the measurement position is uneven, the temperature measured by the radiation thermometer 40 may vary. Therefore, it is presumed that the disturbance in the preheating temperature is influenced by the unevenness on the surface of the welding bead 51 formed in the previous pass, that is, the underlayer shape.

In addition, information required for the machine learning is a trend, not an absolute value. That is, it is possible to learn the presence or absence of the unevenness of the underlayer shape from trend data of the preheating temperature obtained from the inexpensive radiation thermometer 40, instead of the precise measurement data obtained by using the expensive laser displacement meter.

Based on such knowledge, the data logger 30 according to the present embodiment acquires learning data in which the measured value of the radiation thermometer 40 is input as each of values of the parameter indicating the preheating temperature at the measurement position R2 and the value of the parameter indicating the underlayer shape at the measurement position R2. The parameter indicating the underlayer shape is a feature amount that can detect the presence or absence of unevenness of the underlayer shape, and is, for example, a measured value of the preheating temperature or a magnitude of variation in the preheating temperature.

It is also possible to directly evaluate the presence or absence of a defect in the underlayer shape based on the parameter indicating the underlayer shape. Therefore, the data logger 30 may acquire welding data including the parameter indicating the underlayer shape as the evaluation data instead of the learning data of the welding state. The welding assistance device 90 evaluates the presence or absence of the defect (unevenness) of the underlayer shape based on the evaluation data.

In addition, since the measurement position R2 of the preheating temperature is on the upstream side of the welding position R1, the disturbance of the preheating temperature (unevenness of the underlayer shape) is detected before the welding defect actually occurs. That is, by learning the learning data including the disturbance of the preheating temperature, a learning model capable of detecting a sign of a welding defect before welding a position of the underlayer shape having unevenness can be constructed. By using the learning model, it is possible to take measures such as stopping the welding work before the welding defect actually occurs. It is desirable that the distance W between the welding position R1 and the measurement position R2 is set to a distance at which the welder can sufficiently take measures, such as stopping the welding work, in a case where such a sign of the welding defect is detected.

### (Regarding Welding Data Collection Method)

FIG. 3 is a flowchart representing an example of a welding data collection method according to the embodiment of the present disclosure.

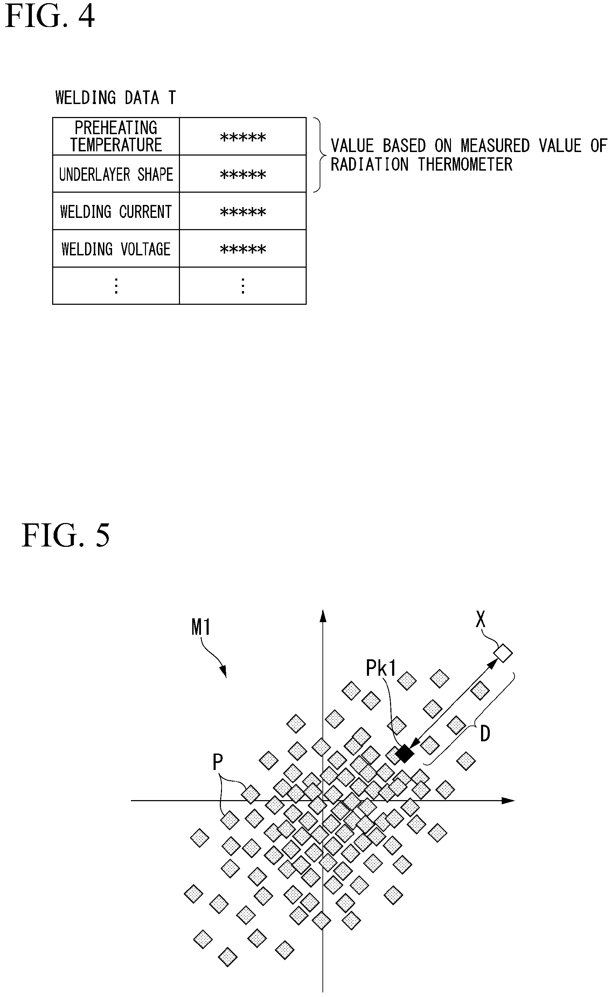

FIG. 4 is a diagram representing an example of welding data according to the embodiment of the present disclosure.

Here, a flow of processing of collecting welding data (learning data or evaluation data) to which the measured value acquired from the radiation thermometer 40 by the data logger 30 is input as values of two parameters of the preheating temperature and the trend of the underlayer shape will be described with reference to FIGS. 3 and 4.

First, the radiation thermometer 40 measures the temperatures of the welding target 50 and a welding bead 51 at the measurement position R2 (Step S10).

Then, as represented in FIG. 4, the data logger 30 inputs the measured value acquired from the radiation thermometer 40 to the "preheating temperature" parameter of welding data T (Step S11). In addition, the data logger 30 inputs the feature amount based on the measured value acquired from the radiation thermometer 40 to the "trend of underlayer shape" parameter of the welding data T (Step S12).

In addition, the data logger 30 acquires and records the welding data T in which the measured value or the feature amount measured by sensors (current meter, voltmeter, and the like) of the welding device 20 is further input to each of the other parameters (welding current, welding voltage, and the like) of the welding data T (Step S13).

The data logger 30 collects the welding data T by repeatedly executing the series of processing of FIG. 3 during a period from the start to the end of the welding work.

### (Regarding Use of Learning Data)

In addition, the welding data T (also referred to as learning data T below) collected by the data logger 30 is used when the learning device 10 performs learning of a machine learning model.

FIG. 5 is a first diagram representing an example of the machine learning model constructed by using learning data according to the embodiment of the present disclosure.

For example, as represented in FIG. 5, the learning device 10 constructs an evaluation model M1 that is a model obtained by learning the learning data T (normal data P) collected during a period in which the welding state is normal and that evaluates the abnormality degree of the welding data X acquired during evaluation.

During the evaluation, normal data Pk1 that is the k1-th (for example, tenth) closest to welding data X among pieces of normal data P included in an evaluation model M1 is selected, and a distance D between the k1-th normal data Pk1 and the welding data X is calculated as the abnormality degree of the welding data X. In a case where the distance D (abnormality degree) exceeds a predetermined threshold value, it is predicted that a welding defect may occur.

By using the evaluation model M1 learned by the above-described learning data, in a case where the variation in the preheating temperature is large, that is, in a case where the underlayer shape has unevenness, the abnormality degree is high, and the occurrence of a welding defect can be predicted.

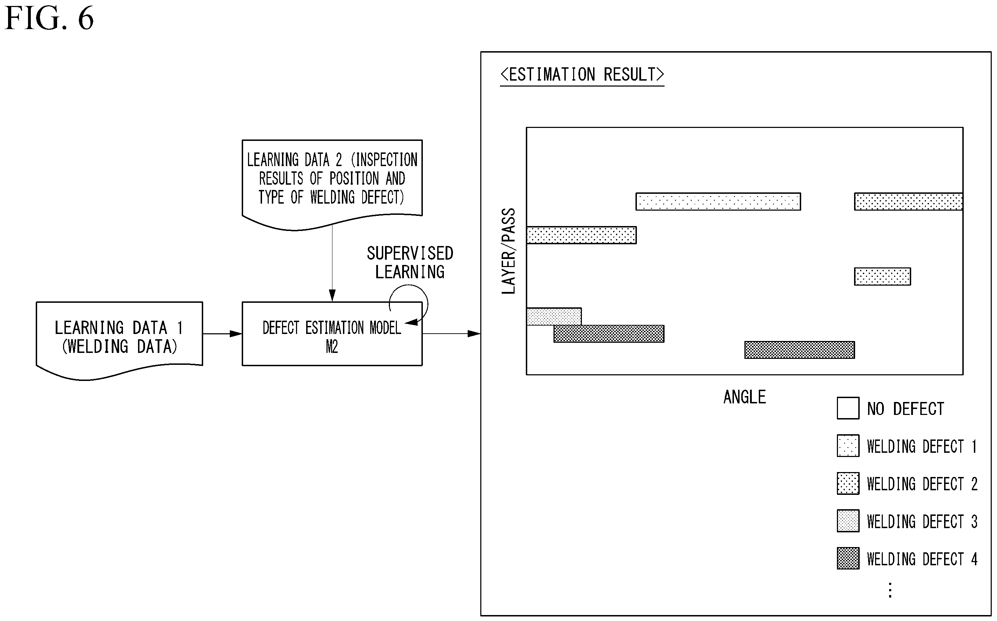

FIG. 6 is a second diagram representing the example of the machine learning model constructed using the learning data according to the embodiment of the present disclosure.

In addition, as represented in FIG. 6, the learning device 10 may perform supervised learning based on the learning data, and the position and the type of welding defect detected by the inspection to construct a defect estimation model M2 that estimates the position and the type of the welding defect. The defect estimation model M2 outputs the position and the type of welding defect as an objective variable when the welding data acquired during the evaluation is input as an explanatory variable.

During the evaluation, a heat map indicating the position and the type of the welding defect may be generated based on the estimation result of the defect estimation model M2 as represented in FIG. 6. Welding defects 1, 2, 3, 4, ... represent different types of welding defects (for example, surface defects, volume defects, porosity, slag inclusion, and the like). The vertical axis of the heat map indicates a layer and pass of welding, and the horizontal axis indicates a position in a welding direction. For example, in a case where a structure having a ring shape such as a pipe is welded while being rotated, the position in the welding direction may be indicated by an angle of the structure.

By using the defect estimation model M2 learned by the above-described learning data, it is possible to predict the occurrence of a welding defect caused by the unevenness of the underlayer shape from the trend of the preheating temperature.

### (Regarding Use of Evaluation Data)

In addition, as described above, the data logger 30 may collect the welding data T as evaluation data instead of as learning data. The evaluation data collected by the data logger 30 is used, for example, for the welding assistance device 90 to evaluate the welding state.

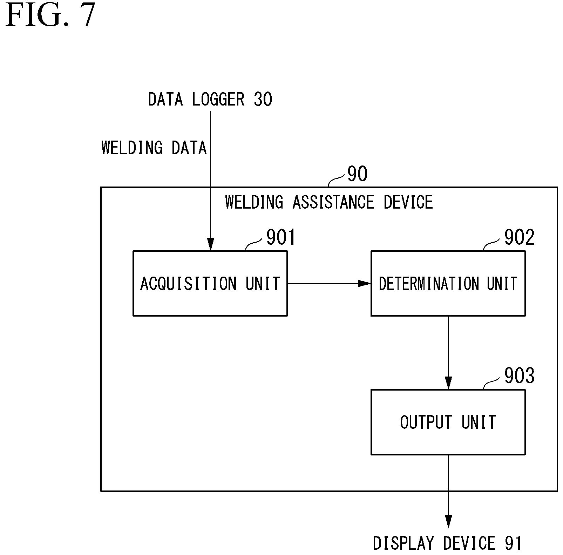

FIG. 7 is a diagram representing a functional configuration of the welding assistance device according to the embodiment of the present disclosure.

As represented in FIG. 7, the welding assistance device 90 includes an acquisition unit 901, a determination unit 902, and an output unit 903.

The acquisition unit 901 acquires welding data T (also referred to as evaluation data T below) from the data logger 30.

The determination unit 902 evaluates the welding state of the welding target 50 based on the welding data. Specifically, the determination unit 902 evaluates the presence or absence of the defect in the underlayer shape based on the "trend of the underlayer shape (trend of the preheating temperature)" parameter included in the evaluation data T. As described above, when the underlayer shape has unevenness, the preheating temperature tends to vary. Therefore, for example, in a case where the magnitude of the variation in the preheating temperature exceeds a predetermined threshold value, the determination unit 902 determines that the underlayer shape has a defect (unevenness).

The output unit 903 outputs (displays) the determination result of the determination unit 902 to the display device 91 to present the determination result to the welder. The welder takes measures such as temporarily stopping the welding or performing work of eliminating the defect of the underlayer shape, with reference to the determination result indicating the defect of the underlayer shape.

In another embodiment, the determination unit 902 may evaluate the welding state by using the evaluation data T acquired from the data logger 30 and the learning model learned by the learning device 10. For example, the determination unit 902 evaluates the abnormality degree of the welding state by using the evaluation data T and the evaluation model M1 that evaluates the abnormality degree of the welding state. In addition, the determination unit 902 estimates the type and the position of the welding defect by using the evaluation data T and the defect estimation model M2.

### (Actions and Effects)

As described above, the method of collecting the learning data according to the present embodiment includes a step of measuring the temperature on the upstream side of the welding position R1 of the welding target 50 and a step of acquiring the welding data T to which a value based on the measured temperature is input as a parameter indicating the underlayer shape.

In this manner, it is possible to obtain the welding data T in which the measurement data of the temperature is input as the value of the parameter indicating the underlayer shape. As a result, it is possible to collect the welding data T including the parameter indicating the underlayer shape with a simple and inexpensive configuration in which an expensive laser displacement meter is omitted. As a result, it is possible to reduce the collection cost of the welding data T.

In addition, the temperature of the welding target is measured by the radiation thermometer 40.

In this manner, it is possible to measure the temperature of the welding target in a noncontact manner.

In addition, the radiation thermometer 40 is disposed at a measurement position R2 on the upstream side of the welding position R1 in the welding direction.

In this manner, it is possible to collect the welding data T including the parameter for enabling detection of the unevenness of the underlayer shape before the occurrence of the welding defect. By using the learning model learned based on such welding data T, it is possible to predict an abnormality or a welding defect caused by the unevenness of the underlayer shape before performing the welding on an uneven portion of the underlayer shape. In addition, by using the welding data T as the evaluation data, it is possible to detect a defect of the underlayer shape before performing the welding on the uneven portion of the underlayer shape.

In addition, the welding data T is learning data T of the learning model that evaluates the welding state.

In this manner, it is possible to collect the learning data T for learning the welding state including the underlayer shape with a simple and inexpensive configuration.

In addition, the learning model is the model constructed by learning the learning data T collected during a period in which the welding state is normal and is the evaluation model M1 that evaluates the abnormality degree of the welding data acquired during evaluation.

As described above, by performing the learning based on the learning data T collected with the simple and inexpensive configuration, it is possible to reduce the cost for constructing the evaluation model M1. In addition, by using the evaluation model M1 learned with the learning data T, it is possible to reflect the presence or absence of the unevenness of the underlayer shape in the abnormality degree from the trend of the preheating temperature and to perform the evaluation.

In addition, the learning model is the model constructed by learning the learning data, and the position and the type of a welding defect detected by inspection and is the defect estimation model that uses the welding data acquired during evaluation as an explanatory variable and uses the position and the type of the welding defect as an objective variable.

As described above, by performing the learning based on the learning data T collected with the simple and inexpensive configuration, it is possible to reduce the cost for constructing the defect estimation model M2. In addition, by using the defect estimation model M2 learned with the learning data T, it is possible to estimate the position and the type of the welding defect caused by the unevenness of the underlayer shape from the trend of the preheating temperature.

Some embodiments of the present disclosure have been described above. However, all of these embodiments are only examples and are not intended to limit the scope of the invention. These embodiments can be implemented in various other forms, and various omissions, replacements, and changes can be made without departing from the gist of the invention. These embodiments and modifications thereof are included in the scope of the invention described in the claims and the equivalent scope thereof, as well as in the scope and gist of the invention.

### <Supplementary Notes>

The welding data collection method described in the above-described embodiment is ascertained as follows, for example.
(1) According to a first aspect of the present disclosure, a welding data collection method is a collection method of collecting welding data T including a plurality of parameters having an influence on a welding state and including at least a parameter indicating an underlayer shape of a welding target 50. The welding data collection method includes a step of measuring a temperature on an upstream side of a welding position of the welding target 50 in a welding direction, as one of parameters representing the underlayer shape, and a step of acquiring the welding data T to which a value based on the temperature measured as the parameter indicating the underlayer shape is input.

In this manner, it is possible to obtain the learning data T to which the value based on the measurement data of the radiation thermometer 40 is input as values of two different parameters of the preheating temperature and the underlayer shape. As a result, it is possible to collect the learning data T with a simple and inexpensive configuration in which an expensive laser displacement meter is omitted. As a result, it is possible to reduce the collection cost of the learning data T. In addition, by measuring the temperature on the upstream side of the welding position, it is possible to collect the welding data T including a parameter for enabling detection of the unevenness of the underlayer shape before the occurrence of the welding defect.

(2) According to a second aspect of the present disclosure, in the collection method according to the first aspect, the temperature of the welding target is measured by a radiation thermometer.

In this manner, it is possible to measure the temperature of the welding target in a noncontact manner.

(3) According to a third aspect of the present disclosure, in the collection method according to the first or second aspect, the welding data T is learning data T of a learning model that evaluates the welding state.

In this manner, it is possible to collect the learning data T for learning the welding state including the underlayer shape with a simple and inexpensive configuration.

(4) According to a fourth aspect of the present disclosure, in the collection method according to the third aspect, the learning model is a model constructed by learning the learning data T collected during a period in which the welding state is normal, and is an evaluation model M1 that evaluates an abnormality degree of the welding data acquired during evaluation.

As described above, by performing machine-learning based on the learning data T collected with the simple and inexpensive configuration, it is possible to reduce the cost for constructing the evaluation model M1. In addition, by using the evaluation model M1 learned with the learning data T, it is possible to reflect the presence or absence of the unevenness of the underlayer shape in the abnormality degree from the trend of the preheating temperature and to perform the evaluation.

(5) According to a fifth aspect of the present disclosure, in the collection method according to the third aspect, the learning model is a model constructed by learning the learning data T and a type of a welding defect detected by inspection and is a defect estimation model M2 that uses the welding data acquired during evaluation as an explanatory variable and uses the type of the welding defect as an objective variable.

As described above, by performing the learning based on the learning data T collected with the simple and inexpensive configuration, it is possible to reduce the cost for constructing the defect estimation model M2. In addition, by using the defect estimation model M2 learned with the learning data T, it is possible to estimate the position and the type of the welding defect caused by the unevenness of the underlayer shape from the trend of the preheating temperature.

### INDUSTRIAL APPLICABILITY

With the welding data collection method according to the present disclosure, it is possible to collect welding data used for machine learning or evaluation of a welding state with a simple and inexpensive configuration.

### REFERENCE SIGNS LIST

1 Welding data collection system
10 Learning device
20 Welding device
21 Welding rod
210 Electrode
30 Data logger
40 Radiation thermometer
90 Welding assistance device
91 Display device

## Claims

1. A collection method of collecting welding data including a plurality of parameters having an influence on a welding state and including at least a parameter indicating an underlayer shape of a welding target, the method comprising:
a step of measuring a temperature on an upstream side of a welding position of the welding target in a welding direction, as one of parameters representing the underlayer shape; and
a step of acquiring the welding data to which a value based on the temperature measured as the parameter indicating the underlayer shape is input.

2. The collection method according to Claim 1,
wherein the temperature of the welding target is measured by a radiation thermometer.

3. The collection method according to Claim 1 or 2,
wherein the welding data is learning data of a learning model that evaluates the welding state.

4. The collection method according to Claim 3,
wherein the learning model is a model constructed by learning the learning data collected during a period in which the welding state is normal and is an evaluation model that evaluates an abnormality degree of the welding data acquired during evaluation.

5. The collection method according to Claim 3,
wherein the learning model is a model constructed by learning the learning data and a type of a welding defect detected by inspection and is a defect estimation model that uses the welding data acquired during evaluation as an explanatory variable and uses the type of the welding defect as an objective variable.
